# EUROPEAN PATENT APPLICATION

(11) **EP 4 852 579 A1**
(43) Date of publication of application: **09.12.2026**
(21) Application number: 24940000.3
(22) Date of filing: 07.05.2024
(51) Int. Cl.: H04W 72/21

(54) **METHOD AND APPARATUS FOR WIRELESS COMMUNICATION**

(71) Applicant: Quectel Wireless Solutions Co., Ltd., Shanghai 201601 (CN)
(72) Inventor: LYU, Ling, Shanghai 201601 (CN); ZHAO, Zheng, Shanghai 201601 (CN)
(74) Representative: Shieldmark
(86) International application number: PCT/CN2024/091466
(87) International publication number: WO 2025/231616

(57) **Abstract**

A wireless communication method and an apparatus are provided. The method includes: receiving, by a first terminal device, a first SSB transmitted by a network device; and performing, by the first terminal device, uplink transmission by using a first RO set corresponding to the first SSB, the first SSB corresponds to a first region; and the first RO set is related to a load of the first region.

## Description

### TECHNICAL FIELD

The present application relates to the field of communications technologies, and more specifically, to a wireless communication method and an apparatus.

### BACKGROUND

To facilitate access of a terminal device to a network, a network device configures a random access resource and performs detection based on the configured random access resource. A related resource configuration is performed based on a principle of ensuring equity of each coverage region. However, the network device may waste a relatively large amount of energy when performing resource configuration and blind detection based on the equity principle. Therefore, how to configure a random access resource for network energy saving has become an urgent technical problem to be resolved.

### SUMMARY

The present application provides a wireless communication method and an apparatus. Various aspects of embodiments of the present application are described below.

According to a first aspect, a wireless communication method is provided, including: receiving, by a first terminal device, a first SSB transmitted by a network device; and performing, by the first terminal device, uplink transmission by using a first RO set corresponding to the first SSB, where the first SSB corresponds to a first region; and the first RO set is related to a load of the first region.

According to a second aspect, a wireless communication method is provided, including: transmitting, by a network device, a first SSB to a first terminal device; and receiving, by the network device, uplink transmission by using a first random access channel occasion RO set corresponding to the first SSB, where the first SSB corresponds to a first region; and the first RO set is related to a load of the first region.

According to a third aspect, a wireless communications apparatus is provided. The apparatus is a first terminal device and includes: a receiving unit, receiving a first SSB transmitted by a network device; and a transmitting unit, performing uplink transmission by using a first RO set corresponding to the first SSB, where the first SSB corresponds to a first region; and the first RO set is related to a load of the first region.

According to a fourth aspect, a wireless communications apparatus is provided. The apparatus is a network device and includes: a transmitting unit, transmitting a first SSB to a first terminal device; and a receiving unit, receiving uplink transmission by using a first RO set corresponding to the first SSB, where the first SSB corresponds to a first region; and the first RO set is related to a load of the first region.

According to a fifth aspect, a communications apparatus is provided, including a memory and a processor, where the memory is configured to store a program; and the processor is configured to invoke the program in the memory to perform the method according to the first aspect or the second aspect.

According to a sixth aspect, an apparatus is provided, including a processor, invoking a program from a memory to perform the method according to the first aspect or the second aspect.

According to a seventh aspect, a chip is provided, including a processor, invoking a program from a memory, to cause a device installed with the chip to perform the method according to the first aspect or the second aspect.

According to an eighth aspect, a computer-readable storage medium is provided, storing a program, where the program causes a computer to perform the method according to the first aspect or the second aspect.

According to a ninth aspect, a computer program product is provided, including a program, where the program causes a computer to perform the method according to the first aspect or the second aspect.

According to a tenth aspect, a computer program is provided. The computer program causes a computer to perform the method according to the first aspect or the second aspect.

In embodiments of the present application, the first RO set by which the first terminal device performs uplink transmission is related to the load of the first region. When different regions in a first cell have different loads, RO sets in the different regions are different. Further, when the network device detects an access request based on an RO set, blind detection to be performed may vary with a load of a region, thereby reducing unnecessary energy consumption.

### BRIEF DESCRIPTION OF THE DRAWINGS

FIG. 1 shows a wireless communications system to which an embodiment of the present application is applied.
FIG. 2 is a schematic flowchart of a wireless communication method according to an embodiment of the present application.
FIG. 3 is a schematic diagram of a possible implementation of the method shown in FIG. 2.
FIG. 4 is a schematic diagram of another possible implementation of the method shown in FIG. 2.
FIG. 5 is a schematic diagram of still another possible implementation of the method shown in FIG. 2.
FIG. 6 is a schematic diagram of yet another possible implementation of the method shown in FIG. 2.
FIG. 7 is a schematic structural diagram of a wireless communications apparatus according to an embodiment of the present application.
FIG. 8 is a schematic structural diagram of another wireless communications apparatus according to an embodiment of the present application.
FIG. 9 is a schematic structural diagram of a communications apparatus according to an embodiment of the present application.

### DETAILED DESCRIPTION OF THE EMBODIMENTS

The following describes the technical solutions in embodiments of the present application with reference to the accompanying drawings in the embodiments of the present application. Apparently, the described embodiments are some rather than all of embodiments of the present application. For embodiments of the present application, all other embodiments obtained by a person of ordinary skill in the art without creative efforts fall within the protection scope of the present application.

Embodiments of the present application may be applied to various communications systems. For example, embodiments of the present application may be applied to a global system for mobile communications (global system of mobile communication, GSM), a code-division multiple access (code division multiple access, CDMA) system, a wideband code-division multiple access (wideband code division multiple access, WCDMA) system, a general packet radio service (general packet radio service, GPRS) system, a long term evolution (long term evolution, LTE) system, an advanced long term evolution (advanced long term evolution, LTE-A) system, a new radio (new radio, NR) system, an evolved system of an NR system, an LTE-based access to unlicensed spectrum (LTE-based access to unlicensed spectrum, LTE-U) system, an NR-based access to unlicensed spectrum (NR-based access to unlicensed spectrum, NR-U) system, a universal mobile telecommunications system (universal mobile telecommunication system, UMTS), a wireless local area network (wireless local area networks, WLAN), wireless fidelity (wireless fidelity, WiFi), and a fifth-generation (5th-generation, 5G) communications system. Embodiments of the present application may be further applied to another communications system, for example, a sixth-generation (6th-generation, 6G) mobile communications system, or a future communications system such as a satellite (satellite) communications system.

Conventional communications systems support a limited quantity of connections and are easy to implement. However, with the development of communications technologies, a communications system may support not only conventional cellular communication but also one or more of other types of communication. For example, the communications system may support one or more types of the following communication: device-to-device (device to device, D2D) communication, machine-to-machine (machine to machine, M2M) communication, machine type communication (machine type communication, MTC), enhanced MTC (enhanced MTC, eMTC), vehicle-to-vehicle (vehicle to vehicle, V2V) communication, vehicle-to-everything (vehicle to everything, V2X) communication, and the like. Embodiments of the present application may also be applied to a communications system that supports the foregoing communication manners.

The communications system in embodiments of the present application may be applied to a carrier aggregation (carrier aggregation, CA) scenario, a dual connectivity (dual connectivity, DC) scenario, or a standalone (standalone, SA) networking scenario.

The communications system in embodiments of the present application may be applied to an unlicensed spectrum. The unlicensed spectrum may also be considered as a shared spectrum. Alternatively, the communications system in embodiments of the present application may be applied to a licensed spectrum. The licensed spectrum may also be considered as a dedicated spectrum.

Embodiments of the present application may be applied to a non-terrestrial network (non-terrestrial network, NTN) system. For example, the NTN system may be a 4G-based NTN system, an NR-based NTN system, an Internet of things (internet of things, IoT)-based NTN system, or a narrow band-Internet of things (narrow band internet of things, NB-IoT)-based NTN system.

The communications system may include one or more terminal devices. The terminal device in embodiments of the present application may also be referred to as user equipment (user equipment, UE), an access terminal, a subscriber unit, a subscriber station, a mobile site, a mobile station (mobile station, MS), a mobile terminal (mobile Terminal, MT), a remote station, a remote terminal, a mobile device, a user terminal, a terminal, a wireless communications device, a user agent, a user apparatus, or the like.

In some embodiments, the terminal device may be a station (STATION, ST) in a WLAN. In some embodiments, the terminal device may be a cellular phone, a cordless phone, a session initiation protocol (session initiation protocol, SIP) phone, a wireless local loop (wireless local loop, WLL) station, a personal digital assistant (personal digital assistant, PDA) device, a handheld device having a wireless communication function, a computing device or another processing device connected to a wireless modem, a vehicle-mounted device, a wearable device, a terminal device in a next-generation communications system (such as an NR system) or a terminal device in a future evolved public land mobile network (public land mobile network, PLMN), or the like.

In some embodiments, the terminal device may be a device that provides a user with voice and/or data connectivity. For example, the terminal device may be a handheld device, a vehicle-mounted device, or the like that has a wireless connection function. In some specific examples, the terminal device may be a mobile phone (mobile phone), a tablet computer (Pad), a notebook computer, a palmtop computer, a mobile Internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like.

In some embodiments, the terminal device may be deployed on land. For example, the terminal device may be deployed indoors or outdoors. In some embodiments, the terminal device may be deployed on a water surface, for example, on a ship. In some embodiments, the terminal device may be deployed in the air, for example, on an airplane, a balloon, and a satellite.

In addition to the terminal device, the communications system may further include one or more network devices. The network device in embodiments of the present application may be a device for communicating with the terminal device. The network device may also be referred to as an access network device or a wireless access network device. The network device may be, for example, a base station. The network device in embodiments of the present application may be a radio access network (radio access network, RAN) node (or device) that connects the terminal device to a wireless network. The base station may broadly cover various names in the following, or may be interchangeable with the following names, for example: a NodeB (NodeB), an evolved NodeB (evolved NodeB, eNB), a next generation NodeB (next generation NodeB, gNB), a relay station, an access point, a transmitting and receiving point (transmitting and receiving point, TRP), a transmitting point (transmitting point, TP), a master eNodeB (MeNB), a secondary eNodeB (SeNB), a multi-standard radio (MSR) node, a home base station, a network controller, an access node, a wireless node, an access point (access point, AP), a transmission node, a transceiver node, a base band unit (base band unit, BBU), a remote radio unit (remote radio unit, RRU), an active antenna unit (active antenna unit, AAU), a remote radio head (remote radio head, RRH), a central unit (central unit, CU), a distributed unit (distributed unit, DU), a positioning node, or the like. The base station may be a macro base station, a micro base station, a relay node, a donor node, or the like, or a combination thereof. Alternatively, the base station may be a communications module, a modem, or a chip disposed in the device or the apparatus described above. Alternatively, the base station may be a mobile switching center, a device that functions as a base station in D2D, V2X, or M2M communications, a network-side device in a 6G network, a device that functions as a base station in a future communications system, or the like. The base station may support networks with a same access technology or different access technologies. A specific technology and a specific device used by the network device are not limited in embodiments of the present application.

The base station may be fixed or mobile. For example, a helicopter or an unmanned aerial vehicle may be configured to serve as a mobile base station, and one or more cells may move based on a location of the mobile base station. In other examples, a helicopter or an unmanned aerial vehicle may be configured to serve as a device in communication with another base station.

In some deployments, the network device in embodiments of the present application may be a CU or a DU, or the network device includes a CU and a DU. The gNB may further include an AAU.

By way of example rather than limitation, in embodiments of the present application, the network device may have a mobility characteristic. For example, the network device may be a mobile device. In some embodiments of the present application, the network device may be a satellite or a balloon station. In some embodiments of the present application, the network device may alternatively be a base station disposed in a location such as land or water.

In embodiments of the present application, the network device may provide a service for a cell. The terminal device communicates with the network device by using a transmission resource (for example, a frequency resource or a spectrum resource) used by the cell. The cell may be a cell corresponding to the network device (for example, a base station). The cell may belong to a macro base station or may belong to a base station corresponding to a small cell (small cell). The small cell herein may include: a metro cell (metro cell), a micro cell (micro cell), a pico cell (pico cell), a femto cell (femto cell), or the like. These small cells have characteristics of small coverage and low transmit power, and are suitable for providing a high-rate data transmission service.

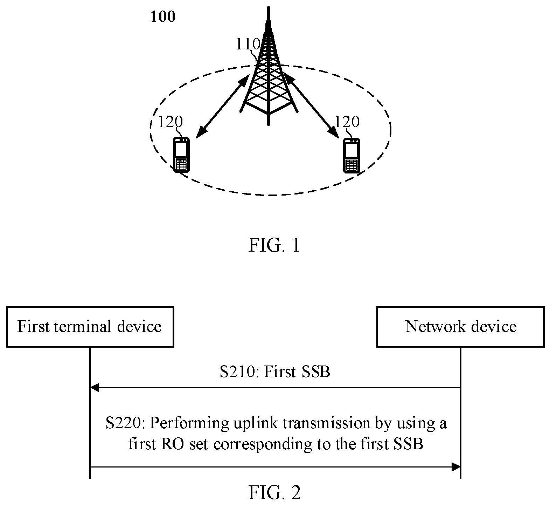

For example, FIG. 1 is a schematic diagram of an architecture of a communications system according to an embodiment of the present application. As shown in FIG. 1, the communications system 100 may include a network device 110, and the network device 110 may be a device that communicates with a terminal device 120 (or referred to as a communications terminal or a terminal). The network device 110 may provide communication coverage for a specific geographical area, and may communicate with a terminal device within the coverage.

FIG. 1 exemplarily shows one network device and two terminal devices. In some embodiments of the present application, the communications system 100 may include a plurality of network devices, and different quantities of terminal devices may be located in coverage ranges of the network devices, which is not limited.

In embodiments of the present application, the wireless communications system shown in FIG. 1 may further include another network entity such as a mobility management entity (mobility management entity, MME) or an access and mobility management function (access and mobility management function, AMF), which is not limited in embodiments of the present application.

It should be understood that a device having a communication function in a network/system in embodiments of the present application may be referred to as a communications device. The communications system 100 shown in FIG. 1 is used as an example. The communications device may include a network device 110 and a terminal device 120 that have a communications function. The network device 110 and the terminal device 120 may be specific devices described above. Details are not described herein again. The communications device may further include another device in the communications system 100, for example, another network entity such as a network controller or a mobility management entity, which is not limited in embodiments of the present application.

For ease of understanding, some relevant technical knowledge related to embodiments of the present application is introduced first. The following related technologies, as optional solutions, may be randomly combined with the technical solutions of embodiments of the present application, all of which fall within the protection scope of embodiments of the present application. Embodiments of the present application include at least part of the following content.

With the development of mobile communications technologies, a new radio evolution system (for example, a 5G system) increases a data transmission rate by using various technologies, thereby meeting a transmission requirement of a large data amount such as a high-definition video or virtual reality. For example, these various technologies include a large-scale (multiple-input multiple-output, MIMO) technology, a non-orthogonal multiple access technology, a co-time co-frequency full-duplex communications technology, a novel modulation technology, a novel coding technology, a high-order modulation technology, or the like. A peak rate can be up to a standard of Gbit/s by using these technologies.

In an example, a delay level of an air interface is required to be about 1 ms, to meet real-time applications such as autonomous driving and remote medical.

In an example, an ultra-large network capacity may provide a connection capability of hundreds of billions of devices, thereby meeting communication requirements of Internet of Things.

In an example, spectral efficiency of an NR system is more than 10 times higher than that of an LTE system. Based on continuous wide-area coverage and high mobility, an experience rate of a user can reach 100 Mbit/s. It may be learned that a traffic density and a connection density are increased greatly.

In addition, improvement of system collaboration and an intelligence level further improves flexibility of a network. System collaboration may be embodied as collaborative networking with a plurality of users, a plurality of points, a plurality of antennas, and a plurality of acquisitions. Based on collaboration and intelligence, automatic adjustment can be performed between networks flexibly.

However, in a communications system, power consumption of the network device (for example, a base station) is usually relatively high. To reduce power consumption of a base station device, the network device may support two configurations of synchronization signal blocks (synchronization signal block, SSB): sparse SSBs and dense SSBs, where the sparse SSBs are SSBs configured with a relatively long cyclicity; and the dense SSBs are SSBs configured with a relatively short cyclicity. Further, the two SSB configurations supported by the network device may be configured based on dynamic activation. It should be noted that the SSB in embodiments of the present application may also represent a synchronization signal/physical broadcast channel block (synchronization signal and PBCH block).

In some embodiments, when the network device transmits SSBs via beams, different SSB indexes correspond to beams in different directions. The network device may cover different regions of a serving cell via multi-beam sweeping. A terminal device located within a coverage region of a beam may determine a resource for random access based on an SSB index corresponding to the beam.

A time-frequency resource for random access of the terminal device may be designed by the network device for each SSB. Optionally, the resource for random access of the terminal device may be a physical random access channel (physical random access channel, PRACH) resource, or may be a random access channel (random access channel, RACH) resource. In other words, a random access resource corresponding to the SSB may include a PRACH resource, or may include an RACH resource. Optionally, the random access resource may include one or more random access channel occasions (random access channel occasion, RACH occasion, RO). It should be noted that RO may also denote a physical random access channel occasion (physical random access channel occasion, PRACH occasion). For brevity, in embodiments of the present application, RO denotes a random access resource corresponding to an SSB.

In an example, configurations of the SSB and the RO are set by a base station, where different SSB indexes correspond to different ROs.

In some embodiments, different beams transmitted by the network device cover different regions based on directions of the beams. In other words, different SSB indexes may correspond to different coverage regions based on beams having different directions. An associated PRACH configuration provides same RACH resources corresponding to each SSB beam index. In an example, a design principle of an RACH resource in Rel-15 is to provide equity among all coverage regions. For example, the network device allocates identical RACH resources to all SSB beam indexes, thereby achieving the equity.

However, in a serving cell of actual communication, different coverage regions have different resource requirements. From the perspective of network energy saving, it is not always beneficial to design identical RACH resources for each SSB.

For example, in an actual network, terminal devices are randomly distributed in a cell. A quantity of terminal devices within coverage of an SSB beam is time-varying. A quantity of terminal devices in SSB#1 (timing index) at time t1 may be less than a quantity of terminal devices in SSB#1 at time t2. In this case, if the plurality of terminal devices at time t2 simultaneously transmit PRACH preambles (preamble) for random access, a preamble conflict probability at time t2 is greater than that at time t1.

For another example, after configuring a random access resource, the network device performs blind detection at corresponding time, thereby receiving an access request of a terminal device. In a serving cell, loads from some specific directions may be lighter than loads from some other directions. Generally, a region with a relatively light load does not have many access requests. When random access resources are configured based on equity, for a region with a light load, it may be unnecessary for a network device to perform some blind detection based on random access resources. It may be learned that for a region with a light load, relatively great energy waste may be caused.

Further, in a scenario in which SSBs are configured dynamically for energy saving, how to configure random access resources is also a problem to be considered. For example, adaptive SSB adjustment may result in changes to configurations of ROs used for some SSBs. Therefore, to support dynamic SSB configuration and further save energy, the network device is required to support adaptive adjustment of a random access resource.

In summary, how to reasonably configure an RO corresponding to an SSB for saving energy of the network device is a technical difficulty worthy of study.

It should be noted that the problem described above, namely, that a related design wastes energy because loads in different regions are different, is merely an example. Embodiments of the present application may be applied to any type of communication scenarios where a design related to a communications device leads to energy waste due to uneven loads.

To resolve the foregoing problem, embodiments of the present application propose a wireless communication method. In this method, a first RO set corresponding to a first SSB is related to a load of a first region covered by the first SSB. It may be learned that ROs corresponding to different SSBs may be adaptively adjusted based on a load of a related region. For example, when the load of the first region is relatively light, a quantity of ROs in the first RO set is relatively small, such that a quantity of blind detection attempts performed by a network device can be reduced, and network energy consumption can be reduced accordingly.

For ease of understanding, a method provided in embodiments of the present application is described in detail below with reference to FIG. 2. FIG. 2 is described from a perspective of interaction between a first terminal device and a network device.

With reference to FIG. 2, in Step S210, the first terminal device receives a first SSB transmitted by the network device.

The first terminal device may be any one of the terminal devices described above, for example, UE, which is not limited herein. The network device may be any one of network devices that communicate with the first terminal device. For example, the network device may be a base station.

In some embodiments, the first terminal device may be any terminal device in a first cell served by the network device. The first terminal device may communicate with the network device by using a resource in the first cell.

In some embodiments, the first terminal device may be a terminal device that receives the first SSB. For example, the first terminal device may be UE that performs initial random access. For another example, the first terminal device may be a terminal device that performs synchronization with the network device by using the first SSB.

In some embodiments, the first terminal device may belong to a specific terminal device type. In an example, the terminal device type may include a first type that supports network energy saving. A type of the first terminal device may be a first type.

In an example, the first type may be a network energy saving (network energy saveing, NES) type. When the type of the first terminal device is the first type, the first terminal device is a device that supports an NES function. For example, in an NES cell, the first terminal device may support the network device or the first cell in related configuration that is based on an energy saving requirement.

A serving cell corresponding to the first terminal device is the first cell. In other words, a cell in which the first terminal device is located is the first cell; or the first cell may provide a service for the first terminal device through the network device.

The first SSB is one or more SSBs that may be received by the first terminal device. It may be learned from the foregoing description that the first SSB may represent a first synchronization signal block, or may represent a first synchronization signal/physical broadcast channel block.

In an example, when the first terminal device receives one SSB, the SSB is the first SSB; when the first terminal device receives a plurality of SSBs, the first SSB may be any SSB in the plurality of SSBs, or may be some or all of the plurality of SSBs.

In some embodiments, the first SSB is one of a plurality of SSBs transmitted by the network device. For example, when two SSBs transmitted by the network device are SSB#1 and SSB#2, the first SSB may be SSB#1, or may be SSB#2. When the first SSB is SSB#1, an index (index) of the first SSB is 1; when the first SSB is SSB#1, an index of the first SSB is 2.

In an example, the index of the first SSB may be a time index or timing index of the SSB.

In some embodiments, the first SSB may be transmitted via a first beam. In other words, a beam used for transmitting the first SSB is the first beam. When the network device transmits a plurality of SSBs via sweeping based on a plurality of beams, the plurality of beams correspond to the plurality of SSBs, respectively. An index of a first beam in the plurality of beams corresponds to an index of the first SSB in the plurality of SSBs. Therefore, the index of the first SSB is also referred to as a first SSB beam index.

The first SSB corresponds to a first region. In some embodiments, the first region may be a coverage region of the first SSB, or may be a region in which the first SSB may be received. In other words, a terminal device in the first region may receive the first SSB.

In an example, the first region may be a specific geographical area. For example, the first region may be represented by a latitude and a longitude.

In an example, the first region may be a variable region. For example, the first region may vary with the first beam.

In an example, the first terminal device is any terminal device in the first region, thereby being capable of receiving the first SSB.

In some embodiments, the first region may be one of a plurality of regions within the first cell. The network device may cover the plurality of regions in the first cell by using a plurality of transmitted SSBs or using a plurality of beams that are used for transmitting a plurality of SSBs.

In some embodiments, the first region is related to a direction of the first beam. The direction of the first beam may also be referred to as a beam direction of the first SSB. In one cycle, the plurality of beams transmitted by the network device correspond to a plurality of beam directions, respectively. The network device may cover a plurality of different regions in the serving cell by using a plurality of beam directions. Therefore, these beam directions may cover terminal devices in different regions, respectively.

In an example, a second SSB transmitted by the network device corresponds to a second region. The first region and the second region correspond to different directions, respectively.

In an example, the first region may be a region covered by the first beam via which the first SSB is transmitted.

In Step S220, the first terminal device performs uplink transmission by using a first RO set corresponding to the first SSB. Correspondingly, the network device may also receive, by using the first RO set corresponding to the first SSB, the uplink transmission transmitted by the first terminal device.

All ROs in the first RO set may be used by the first terminal device for performing the uplink transmission. The uplink transmission may include transmission of an uplink channel, or may include transmission of an uplink signal or message, which is not limited herein.

In an example, the uplink channel may include a PRACH. The uplink signal may include an uplink reference signal, an uplink wake-up signal, or the like.

The first RO set may include one or more ROs. The one or more ROs respectively correspond to one or more time-frequency resources used for transmitting PRACHs or RACHs. As described above, configuring an RO may be replaced with configuring a PRACH resource or an RACH resource. In other words, the network device configuring an RO corresponding to an SSB may indicate that the network device configures a PRACH resource or an RACH resource for the SSB. Therefore, the first RO set may also be referred to as a first PRACH resource set or a first RACH resource set.

In some embodiments, the plurality of ROs in the first RO set may be used for different types of terminal devices. For example, the plurality of ROs in the first RO set may be used for terminal devices that perform random access, or may be used for terminal devices that request system information, or may be used for other terminal devices that transmit uplink reference signals or unlink channels. For another example, the plurality of ROs in the first RO set may be used for conventional terminal devices, or may be used for terminal devices that support the NES function. It may be learned that the first terminal device may be a communications device of any type, or may perform uplink transmission of any type by using a first RO set.

In some embodiments, the one or more ROs in the first RO set may be deployed in different resource pools. For example, when some ROs in the first RO set are used for random access, these ROs may be located in a common resource for random access, or may be located in a dedicated resource of a terminal device. For example, when some ROs in the first RO set are used for another requirement, a resource pool in which these ROs are located is different from a conventional resource pool in which ROs for random access are located.

In an example, the first RO set may include a second RO subset additionally added based on some requirements; and an RO in the second RO subset is located in a resource pool provided based on these requirements. For example, in an NES cell, the network device may configure an NES RO used for transmitting an uplink request. The NES RO used by a terminal device for transmitting an uplink request may be provided in the first resource pool.

For example, an additional PRACH resource may be disposed in a resource pool, namely, the first resource pool. The first resource pool may also be referred to as an additional resource pool. In the first resource pool, additional PRACH resources may be equally allocated to all SSB indexes, or the additional resources may be allocated according to a specific allocation principle. For example, for an SSB index (for example, a specific NES SSB index) having some special usages, a quantity of additional PRACH resources to be used may be greater. Optionally, after all resources in the first resource pool are exhausted, no additional resource can be dynamically activated.

In some embodiments, the first RO set may include an RO having a plurality of configuration manners. For example, the first RO set may include a dynamically configured first RO subset and/or second RO subset, or may include a statically configured third RO subset. In this case, the network device semi-statically configures a plurality of ROs in the first RO set. In other words, some random access resources in the first RO set are fixed, and the other random access resources therein are adaptively adjustable according to an actual communication condition.

In an example, the dynamically configured first RO subset may include one or more dynamically configured ROs, thereby being beneficial for adaptive adjustment.

In an example, the dynamically configured second RO subset is, for example, a PRACH resource that is additionally configured for a terminal device having the NES function. As the PRACH resource is additionally configured independently, an RO in the second RO subset may be dynamically activated/deactivated. For example, the RO in the second RO subset may be configured to transmit a PRACH having a short cycle; and dynamic activation/deactivation may be suitable for a scenario requiring a relatively short RO cycle.

In an example, the statically configured third RO subset may include all conventional ROs that are used for random access.

In some embodiments, the first RO set may include an RO having only one configuration manner. For example, the first RO set may include one or more statically configured ROs. In this scenario, all random access resources corresponding to the first terminal device are indicated in a statically configured manner. For another example, the first RO set may include only one or more dynamically configured ROs. In this scenario, all random access resources corresponding to the first terminal device are determined after adaption or dynamic adjustment performed based on an actual communication condition.

In some embodiments, a plurality of types of RO configurations included in the first RO set may have different cycles. For example, the first RO set may include a dynamically configured second RO subset and a statically configured third RO subset. A cycle of an RO in the second RO subset is less than a cycle of an RO in the third RO subset. When a load of the first region is relatively light, or the terminal device only requests random access, the first RO set may include only the statically configured third RO subset. When the load of the first region is relatively heavy, or an access request of the terminal device requires a relatively dense RO, dynamic configuration of the second RO subset may meet a requirement in a scenario with a relatively heavy load or a relatively short RO cycle.

In an example, when the type of the first terminal device is the first type, the first RO set may include an additional second RO subset and a conventionally configured first RO subset. For example, to dynamically adjust a PRACH in time domain, the first RO subset may be a set of default ROs (relatively sparse ROs) configured by the network device for a conventional terminal device; and the second RO subset may be a set of additional ROs (relatively dense ROs, referred to as NES ROs) configured by the network device for a terminal device having the NES function. It may be learned that a cycle of an RO in the relatively dense second RO subset is less than a cycle of an RO in the relatively sparse first RO subset.

The first RO set corresponding to the first SSB may be a random access resource configured by the network device for the first SSB, or may be a random access resource determined by the terminal device itself based on a configuration of the network device.

In some embodiments, the network device may transmit the first RO set to the first terminal device via first indication information. In other words, the network device transmits the first indication information to the first terminal device, and the first terminal device determines the first RO set based on the first indication information.

In an example, the first indication information may be carried in one or more of the following information: downlink control information (downlink control information, DCI), a system information block (system information block, SIB), system information (system information, SI), or radio resource control (radio resource control, RRC). The SIB may include any SIB (SIBx) transmitted by the network device.

For example, for an adaptive adjustment strategy of a random access resource, the network device may perform semi-static configuration based on the RRC or the SIBx.

In an example, the first RO set corresponding to the first SSB may be indicated by a mapping relationship between SSBs and ROs. For example, the network device or a higher layer may indicate the first RO set corresponding to the first SSB by using an SSB-To-RO mapping parameter. The SSB-To-RO mapping parameter is, for example, an SSB-perRACH occasion.

The first RO set is related to the load of the first region, which may mean that some or all of ROs in the first RO set are determined based on the load of the first region, or that some or all of the ROs in the first RO set are determined based on a parameter or information related to the load of the first region. In other words, the network device may adaptively adjust the first RO set based on the load of the first region.

In some embodiments, that the first RO set is related to the load of the first region may include one or more of the following: a quantity of ROs in the first RO set being related to the load of the first region; a preamble corresponding to an RO in the first RO set being related to the load of the first region; or a cycle of an RO in the first RO set being related to the load of the first region.

In an example, when the quantity of the ROs in the first RO set is related to the load of the first region, the network device or the terminal device may adjust a quantity of ROs corresponding to the first SSB based on the load of the first region. For example, when the load of the first region is greater than an average value of a plurality of regions in the first cell, the quantity of the ROs in the first RO set is increased. For example, when the load of the first region is less than the average value of the plurality of regions in the first cell, the quantity of the ROs in the first RO set is reduced. The following provides an exemplary description with reference to a request density.

In an example, when the network device allocates an RO to each SSB, different SSBs may correspond to different RO quantities based on loads. In other words, adaptive PRACH transmission aims to design a different quantity of PRACH resources for each SSB. For example, the second SSB transmitted by the network device may correspond to a second RO set. When a load of the second region is greater than the load of the first region, a quantity of ROs in the second RO set is greater than the quantity of the ROs in the first RO set.

In an example, when the preamble corresponding to the RO in the first RO set is related to the load of the first region, each RO corresponding to each SSB may support a different quantity of preambles. A preamble may also be referred to as a preamble code. Each preamble corresponds to a specific preamble code format. A preamble corresponding to an RO may be a preamble code or a preamble code format transmitted via the RO, or may be a preamble quantity corresponding to the RO.

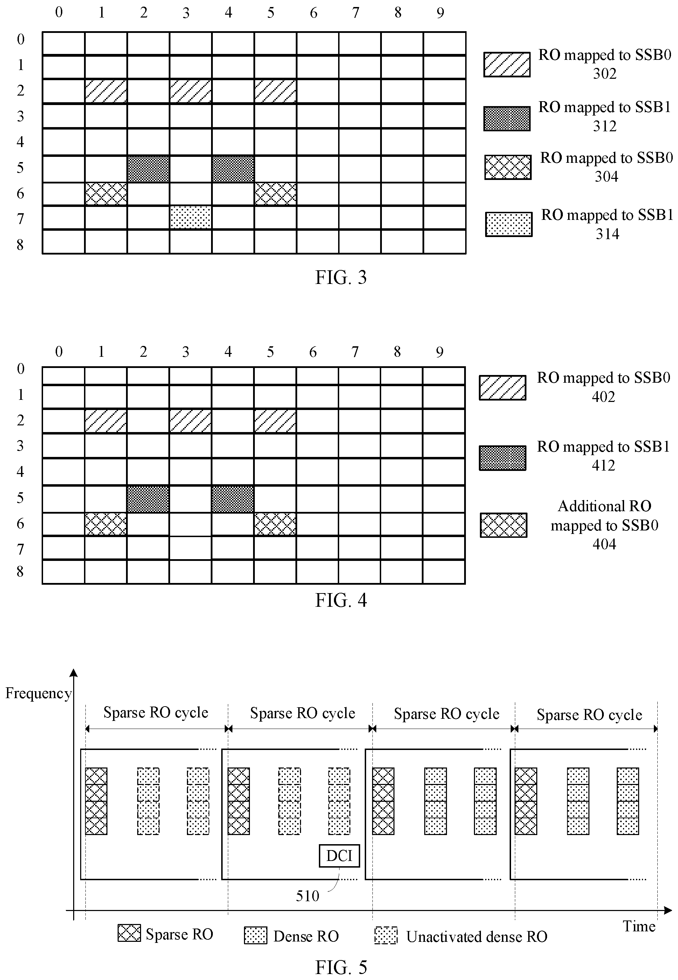

In an example, when the cycle of the RO in the first RO set is related to the load of the first region, the cycle of the RO in the first RO set may be adjusted based on the load. For example, when the load is relatively heavy, the cycle of the RO may be relatively short. For another example, the PRACH resource may include ROs having different cycles. When the load is relatively light, a sparse RO is used. When the load is relatively heavy, a sparse RO and a dense RO are used. The following is described with reference to FIG. 5.

In some embodiments, the load of the first region may include a quantity of terminal devices in the first region that request access, and/or a type of the terminal device in the first region that requests access. For example, the load of the first region includes the quantity of the terminal devices. Spatial domain adaptation of embodiments of the present application may appropriately optimize a quantity of ROs in each direction that matches a quantity of terminal devices within a coverage region in the direction, thereby achieving network energy saving.

In an example, the quantity of the terminal devices in the first region that request access (for example, a UE request access quantity) may be used to determine a first value. The network device may determine the first RO set based on the first value.

Optionally, the first value may be a request density of the first region. For example, the first value may represent an RACH request density of the first region.

For example, when the first SSB is transmitted via an n^{th} beam (1 ≤ n ≤ N, where N denotes a total quantity of beams), the first region is a region covered by the network device in a direction corresponding to the n^{th} beam. Assuming that *Rₙ* denotes a quantity of terminal devices in the direction of the n^{th} beam that request access, the RACH request density *Dₙ* of the first region is:
${D}_{n} = \frac{{R}_{n}}{C} .$

*C* is an integer, and denotes a quantity of ROs available to an SSB in each beam direction, or a maximum quantity of RO resources.

In a current cycle, an average request density of all SSBs (corresponding beams) in an entire network (the first cell) is ${D}_{avg} = {\sum }_{n = 1}^{N} {R}_{n} / \left(N\times C\right)$.

Optionally, the first value may alternatively be a terminal device quantity, or a terminal device density related to an area of a coverage region.

In an implementation, the quantity of the ROs in the first RO set may be determined based on an adjustment coefficient. The network device may adaptively adjust the first RO set based on the adjustment coefficient α. The adjustment coefficient α may represent an adjustment amount of a PRACH resource allocation on each SSB relative to the average request density of the entire network. For example, at instant t, a quantity ${C}_{n}^{′}$ of ROs in the first RO set that corresponds to the first region is:
${C}_{n}^{′} = C + \left⌈α\times \left({D}_{n}-{D}_{avg}\right)\times C\right⌉ .$

Based on the foregoing allocation strategy, the network device may dynamically adjust an RO quantity of each region based on quantities of terminal devices in different regions.

In another implementation, the quantity of the ROs in the first RO set may be determined based on the request density of the first region and the average request density of the first cell. Optionally, when a difference between the request density of the first region and the average request density of the first cell is greater than a resource threshold, the quantity of the ROs in the first RO set is adjusted.

For example, whether to adjust the quantity of the ROs in the first RO set may be determined based on the resource threshold. In other words, the resource threshold may be used to determine a PRACH resource allocation in a direction corresponding to each SSB. If a difference between a request density in a direction corresponding to an SSB and the average request density exceeds the resource threshold specified for a threshold parameter, a resource allocation in this direction may be adjusted accordingly. If the difference is greater than the resource threshold, more resources are allocated. If the difference is less than the resource threshold, an existing resource allocation remains unchanged.

The resource threshold is set to a static threshold. The parameter is R_{target}. When the first SSB corresponding to the first terminal device is transmitted via the n^{th} beam, a request density of the first SSB is *Dₙ*, the average request density of the entire network is *D_{avg}*, and a difference therebetween is Δ*Dₙ*=*Dₙ*-*D_{avg}*.

In an implementation, a resource allocation rule may be described as follows:

If Δ*Dₙ* > R_{target}, more resources are allocated to the direction corresponding to the first SSB. Optionally, an adjustment step may be one RO. Optionally, one RO may be added per adjustment cycle or per instant.

If Δ*Dₙ* < -R_{target}, the resource allocation in the direction corresponding to the first SSB is reduced. Optionally, an adjustment step may be one RO. Optionally, one RO may be reduced per adjustment cycle or per instant.

If -R_{target} ≤ Δ*Dₙ* ≤ R_{target}, the resource allocation in the direction corresponding to the first SSB remains unchanged.

Based on the foregoing allocation strategy, a resource allocation may be adjusted based on differences between request densities in directions corresponding to different SSBs and the average request density of the entire network, thereby achieving better system performance.

In an example, the type of the terminal device in the first region that requests access may include the first type described above. When the first type is included, the network device may additionally allocate an additional RO based on a quantity of terminal devices that are of the first type.

For example, the network device may supplement an energy efficiency cycle by dynamically scheduling an additional PRACH resource (for example, a PRACH preamble code or an RACH occasion). In this case, a conventional terminal device may continue using an RACH resource associated with cyclicity of a semi-static configuration, thereby avoiding any impact on the conventional terminal device. A terminal device having an NES capability may use a cycle-prolonged PRACH configuration and an additional RO resource. For example, each SSB may support a corresponding different RO quantity; and each RO corresponding to each SSB may also support adaptation to a different quantity of preamble codes.

In some embodiments, that the first RO set is related to the load of the first region may include: whether the first RO set includes one or more dynamically configured ROs being related to the load of the first region. Therefore, based on the load of the first region, the network device or the first terminal device may adaptively adjust the first RO set by using one or more dynamically configured ROs.

In an example, the one or more dynamically configured ROs may include a dynamically configured first RO subset. When the first RO set includes the first RO subset, a second PRACH configuration index corresponding to the first RO subset is related to a first PRACH configuration index corresponding to the first RO set. A PRACH resource in the second PRACH configuration index is a subset of PRACH resources in the first PRACH configuration index.

For example, an RO in the first RO subset may also be used for a PRACH independent of a conventional PRACH configuration, and thus may also be referred to as an additional PRACH resource. The additional PRACH resource is a subset of resources corresponding to an index of an actually transmitted SSB. A gNB configures a PRACH resource pool; and different SSB indexes correspond to different ROs or RO groups. An additional PRACH resource is a subset of these ROs or RO groups.

In an example, the one or more dynamically configured ROs may include an additional second RO subset. The second RO subset is disposed in the first resource pool based on the type of the first terminal device. The second RO subset related to the type of the first terminal device may be an independent PRACH resource configured by the network device, or may be an unused PRACH resource that is repurposed. In this scenario, the first SSB may be mapped to a new RACH resource intended for spatial adaption. Compared with another SSB, a resource corresponding to the first SSB may be associated with more ROs. In such an adaptive technology, when cyclicity of an RO is changed dynamically or flexibly, an energy saving gain can be achieved.

For example, when the PRACH resource is configured independently, the network device may perform indication by using an independent configuration index or configuring an independent mask index on a conventional configuration index.

For example, the repurposed PRACH resource may include an RO that is determined not to be used, for example, an RO that is not associated with any SSB, or an RO corresponding to an SSB that is actually not transmitted.

In an example, when the load of the first region is relatively heavy (the quantity of the terminal devices that request access is relatively great), the first RO set includes one or more dynamically configured ROs. Otherwise, the first RO set does not include one or more dynamically configured ROs.

For example, when the first value is less than a first threshold, the first RO set does not include one or more dynamically configured ROs; when the first value is greater than or equal to the first threshold, the first RO set includes one or more dynamically configured ROs. When the first value is related to a request density, the first threshold may be the resource threshold described above.

In an example, when the type of the terminal device in the first region that requests access includes the first type, the first RO set includes one or more dynamically configured ROs. Otherwise, the first RO set does not include one or more dynamically configured ROs.

In some embodiments, the first RO set may also be determined based on one or more of the following information: a service type of the first terminal device; a load of a first cell in which the first terminal device is located; location information of the first terminal device; a channel quality of the first terminal device; a resource threshold of the first region; or a quantity of available ROs in the first region.

In an example, the service type of the first terminal device may reflect finitude or urgency of a service. Optionally, the terminal device may adaptively adjust the first RO set based on its own service type.

In an example, the load of the first cell in which the first terminal device is located may reflect a total quantity of ROs that are to be allocated by the network device. The load of the first cell includes loads of a plurality of regions, such that the load of the first cell includes the load of the first region.

In an example, the location information of the first terminal device may represent information about a distance between the first terminal device and the network device.

In an example, the channel quality of the first terminal device may be represented by parameters such as signal strength. These parameters are, for example, reference signal received power (reference signal received power, RSRP) or a signal to noise ratio (signal to noise ratio, SNR).

In an example, the resource threshold of the first region is, for example, R_{target} described above.

In an example, the quantity of the available ROs in the first region may represent a maximum quantity of ROs in the first region.

In an implementation, the network device may determine the first RO set based on conditions such as the quantity of the terminal devices in the first region that request access, the finitude or urgency of the service of the terminal device, a cell load, or the like, thereby indicating activation or deactivation of an additional RO.

For example, the network device may determine the first RO set by considering a location of the first terminal device, a channel quality, a cell load, or the like. In other words, a PRACH resource allocation strategy may be determined based on a terminal device location, a channel quality, and a cell load. Details are as follows.

It is assumed that the network device is a network device *i* (base station *i),* the first terminal device is a terminal device *j* (UEⱼ), and a corresponding first SSB is SSB*ⱼ*. *P_{i,j}* is set to denote a quantity of PRACH ROs that are allocated by the base station i to SSB*ⱼ* (the quantity of the ROs in the first RO set); and *d_{i,j}* is set to denote the location information of the first terminal device. A signal to noise ratio *SNR_{i,j}* is used as an evaluation metric of a channel quality. A load *Lᵢ* is related to a load of the base station i at a current instant. It may be obtained, by comprehensively considering the foregoing factors, that a quantity *P_{i,j}* of resources allocated by the base station i to the UEⱼ is as follows:
${P}_{i , j} = {P}_{max} ∗ \left(α∗\frac{{d}_{i , j}}{{d}_{max}}+β∗\frac{{SNR}_{i , j}}{{SNR}_{target}}+γ∗\frac{{L}_{i}}{{L}_{max}}\right) ,$
where *Pₘₐₓ* denotes a maximum quantity of available ROs of the network device; *d_{i,j}* denotes a distance between the first terminal device and the network device; *dₘₐₓ* denotes a maximum distance between the network device and the first region; *SNR_{i,j}* denotes a channel quality between the first terminal device and the network device; *SNR_{target}* denotes a target channel quality; *Lᵢ* denotes a load of the first cell at a current instant; *Lₘₐₓ* denotes a maximum load of the first cell; *α, β, γ* denote weight factors; and *α + β* + *γ* = 1.

Optionally, *α, β, γ* are weight factors of three factors: a location of the terminal device, a channel quality, and a cell load. A value of the weight factor may be adjusted according to an actual condition.

A model using the foregoing formula integrates factors such as location information, a channel quality, a system load, or the like, such that an allocation relationship between SSBs and ROs can be adjusted more accurately and dynamically, thereby minimizing competition and collision and optimizing system performance.

In some embodiments, the network device or the terminal device may also adaptively adjust the first RO set based on artificial intelligence. In an example, the network device may determine the first RO set corresponding to the first SSB based on a machine learning-based resource allocation algorithm. For example, historical data and real-time data are analyzed by using a machine learning algorithm, such that PRACH resource requirements under different locations or channel conditions are predicted, and corresponding resource allocations are performed. This method may be optimized more finely according to an actual condition.

That the first RO set by which the first terminal device performs uplink transmission is related to the load of the first region is described above with reference to FIG. 2. When the network device performs adaptive adjustment based on a load, the first indication information may be used for indication. When the terminal device performs adaptive adjustment according to a load, the terminal device is also required to transmit a dynamically adjusted first RO set to the network device, thereby preventing the network device from performing unnecessary blind detection. Further, how the network device or the terminal device dynamically configures the ROs in the first RO set becomes a problem to be considered.

In some embodiments, the network device may determine loads in different regions via sensing or in another manner. For example, a gNB may be aware that there are quite a number of terminal devices in a beam direction corresponding to a specific SSB. In this scenario, the network device may provide a PRACH resource (RO set) corresponding to the beam index.

In some embodiments, the terminal device may request a greater quantity of resources from the network device. For example, the first terminal device transmits first request information to the network device. The first request information is used by the terminal device for requesting a random access resource. When there is a relatively great quantity of RACH resources that are requested by the first request information and correspond to a specific SSB beam index, the network device may additionally provide an RACH resource corresponding to the SSB beam index.

In some embodiments, whether sensed by the network device itself or based on a request from the terminal device, the network device may adjust the random access resources based on each beam index. This adaptation may lead to network energy saving by appropriately optimizing a quantity of ROs in each direction that match a load of each region. For example, an index of the first SSB is SSB#1, and an index of the second SSB is SSB#2. A quantity of terminal devices corresponding to SSB#1 at time t1 may be less than a quantity of terminal devices corresponding to SSB#1 at time t2. In this case, more ROs associated with SSB#1 may be allocated at time t2. If a quantity of terminal devices corresponding to SSB#2 at time t1 is the same as that at time t2, the ROs associated with SSB#2 may remain unchanged at t2.

In an example, the network device may compare quantities of terminal devices that correspond to different SSB indexes, to balance or appropriately optimize quantities of ROs in different regions, thereby achieving network energy saving.

In an example, because ROs may be non-uniformly mapped to each SSB, when selecting an RO in a random access procedure, the first terminal device may take an additional terminal device behavior into consideration. For example, the first terminal device may select, from SSB beam indexes that meet a standard (for example, an RSRP threshold), an SSB beam index that has the greatest quantity of ROs.

In an example, the network device may configure a time/frequency offset for a conventional RO, to allocate an additional RO for a specific SSB beam index.

In the foregoing example, the additionally configured RO or more ROs may include one or more dynamically configured ROs. In other words, when the network device additionally configures ROs, states of these ROs are not fixed but may be dynamically adjusted based on a load.

In some embodiments, the one or more dynamically configured ROs may be activated or deactivated to determine whether the first RO set includes these ROs. For example, any RO in the first RO subset is dynamically configured via activation or deactivation, such that the first RO set includes the first RO subset or does not include the first RO subset.

In an example, the network device may indicate, by using DCI, a SIB, SI, an RRC message, or the like, whether an additional PRACH resource is activated or deactivated. For example, the first indication information may be used to indicate whether the first RO set includes the one or more dynamically configured ROs. When the additional PRACH resource is activated, the first RO set includes the one or more dynamically configured ROs. When the additional PRACH resource is deactivated, the first RO set does not include the one or more dynamically configured ROs.

For example, for PRACH adaption and the additional PRACH resource, a semi-static configuration may be performed based on RRC or SIBx. For example, in the first cell on which the first terminal device camps, the network device may provide, in SIB1, an activation/deactivation indication for the additional PRACH resource. For example, for a PRACH in a secondary cell (secondary cell, Scell), the network device may provide, via RRC, an activation/deactivation indication for the additional PRACH resource.

For example, if a reserved bit is available, the network device may indicate activation/deactivation by paging DCI or DCI format 2_7.

For example, the network device may indicate activation/deactivation of an RO by using SI in a next SI modification cycle.

In an example, under a light-load condition, a terminal device having an NES capability may at least use a conventional resource; under a heavy-load condition, an additional PRACH resource may be activated, via layer 1 (layer 1, L1) signalling, in a terminal device that is in connection mode; and for a terminal device that is in an idle/inactive mode and has an NES capability, an additional PRACH resource may be indicated via SIBx.

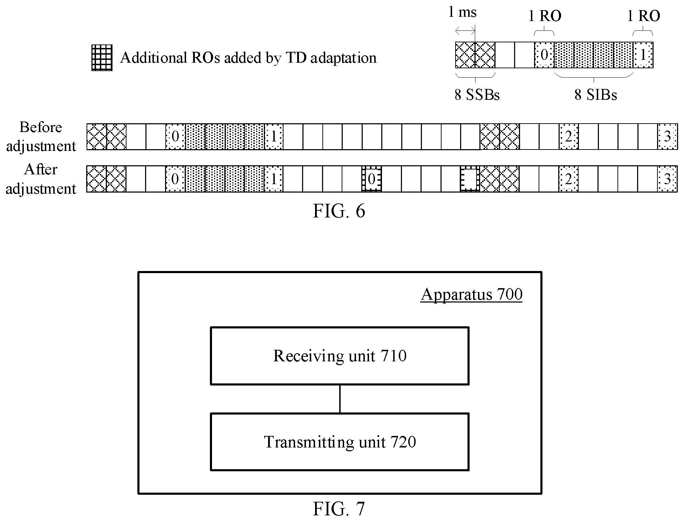

In an example, in a time division duplex (time division duplex, TDD) mode, when a load is increased, an RO may be added in a time division (TD) adaptive manner. The following provides an exemplary description with reference to FIG. 6.

In some embodiments, one or more ROs may be activated/deactivated via triggering, duration setting, or the like. For example, when a network remains activated/deactivated, a last activation or deactivation configuration may not be changed until the network indicates another explicit deactivation/activation configuration. For another example, an activation/deactivation configuration of an RO may be completed within a specified time, that is, by setting a timer.

In some embodiments, the network device (for example, a gNB) may dynamically disable/enable an additional RO (additional PRACH resource). When the additional RO is an NES RO, a default RO and the additional RO may be associated with SSBs, respectively; and each association may follow a conventional method.

In an example, the NES RO is disabled; and all terminal devices (including conventional UE and NES UE) can use only the default RO. In case of a long access delay, congestion, or the like, the default RO may be insufficient. In this case, the network device may directly provide an additional NES RO for the NES UE to use, or may request a configuration of an additional NES RO based on a requirement of the NES UE.

In some embodiments, an enabling or disabling time of the additional RO may be determined based on a reception time of a configuration indication. For example, an enabling or disabling time of any RO in the second RO subset is determined based on a reception time of an activation or deactivation configuration indication and a first time parameter.

Optionally, an activation configuration or a deactivation configuration of any RO in the second RO subset is determined based on a reception time of indication information of the configuration. For example, an effective time of the activation configuration or the deactivation configuration of any RO is determined based on a reception time of resource configuration information.

Optionally, the activation/deactivation configuration of any RO in the second RO subset is determined based on the reception time of the indication information of the configuration and the first time parameter. For example, an effective time of a configuration of any RO is determined based on a reception time of the resource configuration information and the first time parameter.

In an example, the first time parameter may be a time period T. The time period T may be a pre-defined time period, or may be directly indicated from a plurality of pre-configured candidates. For example, an RO indicated to be activated is considered to be available after the time period T from a time at which the configuration indication is received. In an example, the first time parameter may be a time period associated with a mode or a service type. For example, an activated RO may take effect from an associated period after a time point indicated by a configuration.

In an example, after an RO in the second RO subset is disabled or deactivated, all terminal devices can use only the default RO. All the terminal devices may each include a conventional terminal device and a terminal device that supports the NES function. In case of a relatively long access delay or congestion, a quantity of default ROs may be insufficient. In this case, a base station may additionally provide an NES RO for use by a terminal device that supports the NES function; or the terminal device that supports the NES function may transmit a request to the base station based on a requirement.

In some embodiments, the network device may determine a resource allocation strategy for a plurality of regions and transmit indications to terminal devices in different regions. In an example, the first terminal device receives the first indication information transmitted by the network device. The first terminal device may determine, based on the first indication information, whether the first RO set includes one or more dynamically configured ROs.

In an example, the first indication information may be determined based on a result of a machine learning model.

In some embodiments, the network device may detect a difference between loads in different directions. In this manner, a gNB may reduce a quantity of blind detection attempts in a region where a quantity of UEs is estimated to be small, such that consumed network energy can be reduced accordingly. For example, the gNB may detect that loads from some specific directions are lighter than loads from some other directions. In this scenario, when the first RO set is related to a load, SSBs corresponding to these light-load regions may be associated with fewer RACH resources than those in the other directions. An estimated RACH transmission amount is not so accurate. However, with the development of load analysis or other techniques (for example, sensing), it is beneficial for the gNB to have such flexibility, thereby adapting to an RACH resource associated with each SSB.

In an example, the base station may autonomously adjust the first RO set. The gNB may determine that RACH requests from some directions (namely, associated SSBs) are not as many as those from other directions, and then change an RO/preamble code resource corresponding to each SSB.

In some embodiments, the terminal device may adjust a quantity of ROs in a corresponding direction of each SSB based on a load and another factor, and update a corresponding configuration parameter. The configuration parameter is, for example, a ROOT sequence index, a preamble code configuration, or the like.

In some embodiments, the network device may set a dynamically adjustable cycle T and adjust a quantity of ROs corresponding to an SSB every cycle T.

In some embodiments, the network device may dynamically adjust a resource allocation for PRACH ROs in each SSB direction under a current condition that the SSB is loaded. To allocate a different quantity of ROs to each SSB, different SSB-To-RO mapping parameters may be configured for different SSB indexes (groups).

In some embodiments, the network device may implement a semi-static configuration by using two or more PRACH configuration indexes. Via the semi-static configuration, the network device can provide a PRACH configuration for a terminal device having an R19 NES capability. Optionally, two or more configuration indexes should correspond to a same preamble code format.

In some embodiments, the network device may adjust a PRACH resource based on SSB adjustment and a load. When the network device detects that loads from some specific directions are lighter than loads from some other directions, it may be ensured that SSBs corresponding to these specific directions are associated with fewer RACH resources than those in other directions. In this manner, the network device may reduce a quantity of blind detection attempts in a region where a quantity of terminal devices is estimated to be small, such that consumed network energy can be reduced accordingly.

In an example, an SSB having a long cycle is accordingly configured with more ROs; and an SSB having a short cycle is accordingly configured with fewer ROs. In this scenario, a random access resource may be ensured via RO configuration in the case that an SSB is dynamically configured.

In an example, an SSB having a long cycle is accordingly configured with fewer ROs; and an SSB having a short cycle is accordingly configured with more ROs. In this scenario, a quantity of times by which the network device performs blind detection may be further reduced based on the SSB dynamic configuration, to achieve network energy saving.

For ease of understanding, the following are described below with reference to FIG. 3 to FIG. 6 by using examples: whether the first RO set includes one or more dynamically configured ROs; and a dynamic configuration manner of the one or more dynamically configured ROs. FIG. 3 and FIG. 4 are used to illustrate dynamic configurations of ROs corresponding to different SSBs. FIG. 5 is used to illustrate an activation manner of a dense RO. FIG. 6 is used to illustrate an RO that is added based on TD adaptation.

With reference to FIG. 3, in time-frequency domain, the network device configures ROs for SSB0 and SSB1 respectively. ROs in different filled patterns are associated with different SSB indexes or RO subsets. ROs corresponding to SSB0 (RO mapped to SSB0) include RO 302 and RO 304. ROs corresponding to SSB1 (RO mapped to SSB1) include RO 312 and RO 314. RO 302 is a statically configured third RO subset (subset RO) that corresponds to SSB0; and RO 304 is a dynamically configured first RO subset that corresponds to SSB0. Correspondingly, RO 312 is a statically configured third RO subset that corresponds to SSB1; and RO 314 is a dynamically configured first RO subset that corresponds to SSB1. The first RO subset in FIG. 3 may determine whether it is in an active state or an inactive state based on an indication. Activation/deactivation of the first RO subset may be used dynamically. It may be learned from FIG. 3 that the statically configured RO and the dynamically configured RO of SSB1 as well as those of SSB0 are different.

For SSB0, no matter how a load changes, three ROs in RO 302 remain unchanged. When a load of a region corresponding to SSB0 is increased, two ROs in RO 304 may be activated; when the load of the region corresponding to SSB0 is reduced, the two ROs in RO 304 may be deactivated. Therefore, dynamic adjustment of the ROs corresponding to SSB0 is realized.

For SSB1, no matter how a load changes, two ROs in RO 312 remain unchanged. When a load of a region corresponding to SSB1 is increased, one RO in RO 314 may be activated; when the load of the region corresponding to SSB1 is reduced, one RO in RO 314 may be deactivated. Therefore, dynamic adjustment of the RO corresponding to SSB1 is realized.

With reference to FIG. 4, in time-frequency domain, the network device configures ROs for SSB0 and SSB1 respectively. ROs in different filled patterns are associated with different SSB indexes. ROs corresponding to SSB0 include RO 402 and RO 404. An RO corresponding to SSB1 includes RO 412. RO 402 and RO 412 are statically configured ROs of SSB9 and SSB1, respectively. RO 404 is an RO additionally configured by the network device for SSB0 (additional RO mapped to SSB0). Therefore, RO 404 may be an additional second RO subset. SSB1 does not have any additional RO.

For SSB0, no matter how a load changes, three ROs in RO 402 remain unchanged. When a load of a region corresponding to SSB0 is increased, two additionally configured ROs in RO 404 may be activated; when the load of the region corresponding to SSB0 is reduced, the two ROs in RO 404 may be deactivated. Therefore, dynamic adjustment of the ROs corresponding to SSB0 is realized.

For SSB1, no matter how a load changes, ROs in RO 412 remain unchanged, and are not adjusted dynamically.

Optionally, by using SIBx, DCI, or RRC signalling, two ROs corresponding to SSB0 are added, and the RO corresponding to SSB1 remains unchanged.

With reference to FIG. 5, in time-frequency domain, the network device configures a sparse (sparse) RO and a dense (dense) RO. Two types of filled patterns respectively denote a configuration of the sparse RO and a configuration of the dense RO. A solid line indicates that the RO is in an active state. A dashed line indicates that the RO is in an inactive state. It may be learned from FIG. 5 that in each sparse RO cycle (sparse RO cycle), there is one group of statically configured sparse ROs and two groups of dynamically configured dense ROs. Generally, the dense ROs are in the inactive state, such that blind detection performed by the network device can be reduced. When the load of the first region is increased, or when the type of the terminal device in the first region includes the first type, the network device may activate the dense ROs by using DCI 510 (activation DCI of dense RO).

As shown in FIG. 5, dense ROs in a first sparse RO cycle and a second sparse RO cycle are inactive (deactivated dense RO). After the first terminal device receives DCI in the second sparse RO cycle, dense ROs in a third sparse RO cycle and a fourth sparse RO cycle are active.

By using a frequency range 1 (frequency range, FR1), a TDD mode, and a PRACH config17 format as examples, FIG. 6 shows an embodiment based on an RO that is adjusted based on TD adaptation. With reference to FIG. 6, in this format, eight SSBs are transmitted within 2 ms. There is one RO (RO 0) 2 ms after the SSB is transmitted, followed by eight SIBs and another RO (RO 1).

As shown in FIG. 6, four ROs (ROs 0 to 3) before adjustment are statically configured. To implement PRACH adaptation in time domain, the network device may add ROs based on TD adaptation (additional ROs added by TD adaptation). In other words, when a load is increased, two ROs (RO 0 and RO 1 that are added after adjustment) are added adaptively.

Method embodiments of the present application are described in detail above with reference to FIG. 1 to FIG. 6. Apparatus embodiments of the present application are described in detail below with reference to FIG. 7 to FIG. 9. It should be understood that the description of the apparatus embodiments corresponds to the description of the method embodiments. Therefore, for parts that are not described in detail, reference may be made to the foregoing method embodiments.

FIG. 7 is a schematic block diagram of a wireless communications apparatus according to an embodiment of the present application. The apparatus 700 may be any one of the first terminal devices described above. The apparatus 700 shown in FIG. 7 includes a receiving unit 710 and a transmitting unit 720.

The receiving unit 710 may be configured to receive a first SSB transmitted by a network device.

The transmitting unit 720 may be configured to perform uplink transmission by using a first RO set corresponding to the first SSB, where the first SSB corresponds to a first region; and the first RO set is related to a load of the first region.

Optionally, that the first RO set is related to the load of the first region includes: whether the first RO set includes one or more dynamically configured ROs being related to the load of the first region.

Optionally, the one or more dynamically configured ROs include a first RO subset; and any RO in the first RO subset is dynamically configured via activation or deactivation.

Optionally, the one or more dynamically configured ROs include an additional second RO subset; and the second RO subset is disposed in a first resource pool based on a type of the first terminal device.

Optionally, the receiving unit 710 is further configured to receive first indication information transmitted by the network device; and the apparatus 700 further includes a determining unit that may be configured to determine, based on the first indication information, whether the first RO set includes one or more dynamically configured ROs.

Optionally, the first indication information is determined based on a result of a machine learning model.

Optionally, the first indication information is carried in one or more of the following information: DCI, a SIB, SI, or RRC.

Optionally, the load of the first region includes a quantity of terminal devices in the first region that request access, and/or a type of the terminal device in the first region that requests access.

Optionally, the quantity of the terminal devices is used to determine a first value; and when the first value is less than a first threshold, the first RO set does not include one or more dynamically configured ROs; when the first value is greater than or equal to the first threshold, the first RO set includes one or more dynamically configured ROs.

Optionally, the type of the terminal device includes a first type that supports network energy saving; and when a type of the first terminal device is the first type, the first RO set includes an additional second RO subset.

Optionally, the first RO set includes a statically configured third RO subset; and a cycle of an RO in the second RO subset is less than a cycle of an RO in the third RO subset.

Optionally, an enabling or disabling time of any RO in the second RO subset is determined based on a reception time of an activation or deactivation configuration indication and a first time parameter.

Optionally, that the first RO set is related to the load of the first region further includes one or both of the following: a quantity of ROs in the first RO set being related to the load of the first region; or a cycle of an RO in the first RO set being related to the load of the first region.

Optionally, a second SSB transmitted by the network device corresponds to a second RO set; the second SSB corresponds to a second region; and when a load of the second region is greater than the load of the first region, a quantity of ROs in the second RO set is greater than the quantity of the ROs in the first RO set.

Optionally, the first RO set is also determined based on one or more of the following information: a service type of the first terminal device; a load of a first cell in which the first terminal device is located; location information of the first terminal device; a channel quality of the first terminal device; a resource threshold of the first region; or a quantity of available ROs in the first region.

Optionally, the load of the first cell includes the load of the first region; the network device is a network device *i*; the first terminal device is a terminal device *j*; and a quantity *P_{i,j}* of ROs in the first RO set is:
${P}_{i , j} = {P}_{max} ∗ \left(α∗\frac{{d}_{i , j}}{{d}_{max}}+β∗\frac{{SNR}_{i , j}}{{SNR}_{target}}+γ∗\frac{{L}_{i}}{{L}_{max}}\right) ,$
where *P*ₘₐₓ denotes a maximum quantity of available ROs of the network device; *d_{i,j}* denotes a distance between the first terminal device and the network device; *dₘₐₓ* denotes a maximum distance between the network device and the first region; *SNR_{i,j}* denotes a channel quality between the first terminal device and the network device; *SNR_{target}* denotes a target channel quality; *Lᵢ* denotes a load of the first cell at a current instant; *L*ₘₐₓ denotes a maximum load of the first cell; *α*, *β*, *γ* denote weight factors; and *α* + *β* + *γ* = 1.

Optionally, the load of the first region is a quantity of terminal devices; and when a difference between a request density of the first region and an average request density of the first cell is greater than the resource threshold, a quantity of ROs in the first RO set is adjusted.

Optionally, the first SSB is transmitted via a first beam; and the first region is a region covered by the first beam.

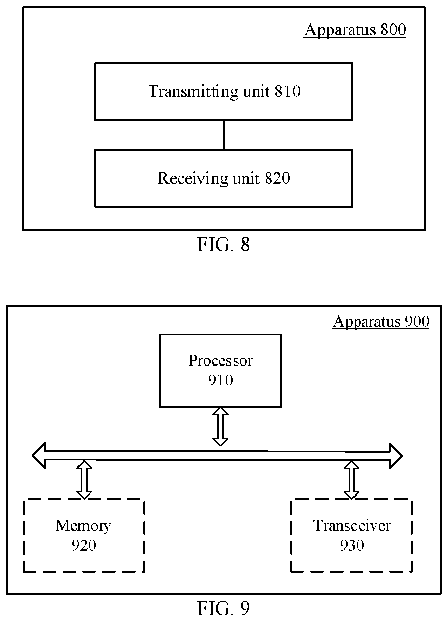

FIG. 8 is a schematic block diagram of another wireless communications apparatus according to an embodiment of the present application. The apparatus 800 may be any network device described above. The apparatus 800 shown in FIG. 8 includes a transmitting unit 810 and a receiving unit 820.

The transmitting unit 810 may be configured to transmit a first SSB to a first terminal device.

The receiving unit 820 may be configured to receive uplink transmission by using a first RO set corresponding to the first SSB, where the first SSB corresponds to a first region; and the first RO set is related to a load of the first region.

Optionally, that the first RO set is related to the load of the first region includes: whether the first RO set includes one or more dynamically configured ROs being related to the load of the first region.

Optionally, the one or more dynamically configured ROs include a first RO subset; and any RO in the first RO subset is dynamically configured via activation or deactivation.

Optionally, the one or more dynamically configured ROs include an additional second RO subset; and the second RO subset is disposed in a first resource pool based on a type of the first terminal device.

Optionally, the transmitting unit 810 is further configured to transmit first indication information to the first terminal device, where the first indication information is used to indicate whether the first RO set includes the one or more dynamically configured ROs.

Optionally, the first indication information is determined based on a result of a machine learning model.

Optionally, the first indication information is carried in one or more of the following information: DCI, a SIB, SI, or RRC.

Optionally, the load of the first region includes a quantity of terminal devices in the first region that request access, and/or a type of the terminal device in the first region that requests access.

Optionally, the quantity of the terminal devices is used to determine a first value; and when the first value is less than a first threshold, the first RO set does not include one or more dynamically configured ROs; when the first value is greater than or equal to the first threshold, the first RO set includes one or more dynamically configured ROs.

Optionally, the type of the terminal device includes a first type that supports network energy saving; and when a type of the first terminal device is the first type, the first RO set includes an additional second RO subset.

Optionally, the first RO set includes a statically configured third RO subset; and a cycle of an RO in the second RO subset is less than a cycle of an RO in the third RO subset.

Optionally, an enabling or disabling time of any RO in the second RO subset is determined based on a reception time of an activation or deactivation configuration indication and a first time parameter.

Optionally, that the first RO set is related to the load of the first region further includes one or both of the following: a quantity of ROs in the first RO set being related to the load of the first region; or a cycle of an RO in the first RO set being related to the load of the first region.

Optionally, a second SSB transmitted by the network device corresponds to a second RO set; the second SSB corresponds to a second region; and when a load of the second region is greater than the load of the first region, a quantity of ROs in the second RO set is greater than the quantity of the ROs in the first RO set.

Optionally, the first RO set is also determined based on one or more of the following information: a service type of the first terminal device; a load of a first cell in which the first terminal device is located; location information of the first terminal device; a channel quality of the first terminal device; a resource threshold of the first region; or a quantity of available ROs in the first region.

Optionally, the load of the first cell includes the load of the first region; the network device is a network device *i*; the first terminal device is a terminal device *j*; and a quantity of ROs in the first RO set is:
${P}_{i , j} = {P}_{max} ∗ \left(α∗\frac{{d}_{i , j}}{{d}_{max}}+β∗\frac{{SNR}_{i , j}}{{SNR}_{target}}+γ∗\frac{{L}_{i}}{{L}_{max}}\right) ,$
where *P*ₘₐₓ denotes a maximum quantity of available ROs of the network device; *d_{i,j}* denotes a distance between the first terminal device and the network device; *dₘₐₓ* denotes a maximum distance between the network device and the first region; *SNR_{i,j}* denotes a channel quality between the first terminal device and the network device; *SNR*_{*t*ar*get*} denotes a target channel quality; *Lᵢ* denotes a load of the first cell at a current instant; *Lₘₐₓ* denotes a maximum load of the first cell; *α*, *β*, *γ* denote weight factors; and *α + β* + *γ* = 1.

Optionally, the load of the first region is a quantity of terminal devices; and when a difference between a request density of the first region and an average request density of the first cell is greater than the resource threshold, a quantity of ROs in the first RO set is adjusted.

Optionally, the first SSB is transmitted via a first beam; and the first region is a region covered by the first beam.

FIG. 9 is a schematic structural diagram of a communications apparatus according to an embodiment of the present application. Dashed lines in FIG. 9 indicate that the units or modules are optional. The apparatus 900 may be configured to implement a method described in the foregoing method embodiments. The apparatus 900 may be a chip, a terminal device, or a network device.

The apparatus 900 may include one or more processors 910. The processor 910 may support the apparatus 900 in implementing a method described in the foregoing method embodiments. The processor 910 may be a general-purpose processor or a dedicated processor. For example, the processor may be a central processing unit (central processing unit, CPU). Alternatively, the processor may be another general-purpose processor, a digital signal processor (digital signal processor, DSP), an application specific integrated circuit (application specific integrated circuit, ASIC), a field programmable gate array (field programmable gate array, FPGA) or another programmable logic device, a discrete gate or transistor logic device, a discrete hardware component, or the like. The general-purpose processor may be a microprocessor; or the processor may be any conventional processor or the like.

The apparatus 900 may further include one or more memories 920. The memory 920 stores a program. The program may be executed by the processor 910, to cause the processor 910 to perform a method described in the foregoing method embodiments. The memory 920 may be separate from the processor 910 or may be integrated into the processor 910.

The apparatus 900 may further include a transceiver 930. The processor 910 may communicate with another device or chip by using the transceiver 930. For example, the processor 910 may transmit data to and receive data from another device or chip by using the transceiver 930.

An embodiment of the present application further provides a computer-readable storage medium for storing a program. The computer-readable storage medium may be applied to the terminal device or the network device provided in embodiments of the present application, and the program causes a computer to perform a method to be performed by the terminal device or the network device in various embodiments of the present application.

The computer-readable storage medium may be any usable medium readable by a computer, or a data storage device, such as a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, a solid state disk (solid state disk, SSD)), or the like.

An embodiment of the present application further provides a computer program product. The computer program product includes a program. The computer program product may be applied to the terminal device or the network device provided in embodiments of the present application, and the program causes a computer to perform a method to be performed by the terminal device or the network device in various embodiments of the present application.

All or some of the foregoing embodiments may be implemented by using software, hardware, firmware, or any combination thereof. When software is used to implement embodiments, the foregoing embodiments may be implemented completely or partially in a form of a computer program product. The computer program product includes one or more computer instructions. When the computer program instructions are loaded and executed on a computer, the procedures or functions according to embodiments of the present application are completely or partially generated. The computer may be a general-purpose computer, a dedicated computer, a computer network, or another programmable apparatus. The computer instructions may be stored in a computer-readable storage medium or transmitted from one computer-readable storage medium to another computer-readable storage medium. For example, the computer instructions may be transmitted from one website, computer, server, or data center to another website, computer, server, or data center in a wired (for example, a coaxial cable, an optical fiber, and a digital subscriber line (digital subscriber line, DSL)) manner or a wireless (for example, infrared, wireless, and microwave) manner.

An embodiment of the present application further provides a computer program. The computer program may be applied to the terminal device or the network device provided in embodiments of the present application, and the computer program causes a computer to perform a method to be performed by the terminal device or the network device in various embodiments of the present application.

The terms "system" and "network" in the present application may be used interchangeably. In addition, the terms used in the present application are merely used to explain the specific embodiments of the present application, but are not intended to limit the present application. In the specification, claims, and accompanying drawings of the present application, the terms "first", "second", "third", "fourth", and the like are intended to distinguish between different objects but do not describe a particular order. In addition, the terms "include" and "have" and any other variations thereof are intended to cover a non-exclusive inclusion.

In embodiments of the present application, "indicate" mentioned herein may indicate a direct indication, or may indicate an indirect indication, or may indicate that there is an association relationship. For example, A indicates B, which may mean that A directly indicates B, for example, B may be obtained by means of A; or may mean that A indirectly indicates B, for example, A indicates C, and B may be obtained by means of C; or may mean that there is an association relationship between A and B.

In embodiments of the present application, the term "corresponding" may mean that there is a direct or indirect correspondence between two elements, or that there is an association relationship between two elements, or that there is a relationship of "indicating" and "being indicated", "configuring" and "being configured", or the like.

In embodiments of the present application, "pre-defined" or "pre-configured" may be implemented by pre-storing corresponding codes, tables, or other forms that can be used to indicate related information in devices (for example, including the terminal device and the network device), and a specific implementation thereof is not limited in the present application. For example, being pre-defined may refer to being defined in a protocol.

In embodiments of the present application, the "protocol" may indicate a standard protocol in the communications field, and may include, for example, an LTE protocol, an NR protocol, and a related protocol applied to a future communications system, which is not limited in the present application.

In embodiments of the present application, determining B based on A does not mean determining B based only on A, but instead, B may be determined based on A and/or other information.

In embodiments of the present application, the term "and/or" is merely an association relationship that describes associated objects, and represents that there may be three relationships. For example, A and/or B may represent three cases: only A exists, both A and B exist, and only B exists. In addition, the character "/" in this specification generally indicates an "or" relationship between the associated objects.

In embodiments of the present application, sequence numbers of the foregoing processes do not mean execution sequences. The execution sequences of the processes should be determined based on functions and internal logic of the processes, and should not be construed as any limitation on the implementation processes of embodiments of the present application.

In several embodiments provided in the present application, it should be understood that the disclosed system, apparatus, and method may be implemented in other manners. For example, the described apparatus embodiments are merely examples. For example, unit division is merely logical function division and may be other division in actual implementation. For example, a plurality of units or components may be combined or integrated into another system, or some features may be ignored or not executed. In addition, the displayed or discussed mutual couplings or direct couplings or communication connections may be implemented by using some interfaces. Indirect couplings or communication connections between apparatuses or units may be implemented in electrical, mechanical, or other forms.

Units described as separate components may be or may not be physically separate, and components displayed as units may be or may not be physical units, and may be located in one position or distributed on a plurality of network units. Some or all of the units may be selected according to actual needs to achieve an objective of a solution in embodiments.

In addition, functional units in embodiments of the present application may be integrated into one processing unit, or each of the units may exist alone physically, or two or more units may be integrated into one unit.

The foregoing descriptions are merely specific implementations of the present application, but the protection scope of the present application is not limited thereto. Any variation or replacement readily figured out by a person skilled in the art within the technical scope disclosed in the present application shall fall within the protection scope of the present application. Therefore, the protection scope of the present application shall be subject to the protection scope of the claims.

## Claims

1. A wireless communication method, comprising:
receiving, by a first terminal device, a first synchronization signal block SSB transmitted by a network device; and
performing, by the first terminal device, uplink transmission by using a first random access channel occasion RO set corresponding to the first SSB,
wherein the first SSB corresponds to a first region; and the first RO set is related to a load of the first region.

2. The method according to claim 1, wherein that the first RO set is related to the load of the first region comprises: whether the first RO set comprises one or more dynamically configured ROs being related to the load of the first region.

3. The method according to claim 2, wherein the one or more dynamically configured ROs comprise a first RO subset; and any RO in the first RO subset is dynamically configured via activation or deactivation.

4. The method according to claim 2, wherein the one or more dynamically configured ROs comprise an additional second RO subset; and the second RO subset is disposed in a first resource pool based on a type of the first terminal device.

5. The method according to any one of claims 2 to 4, wherein the method further comprises:
receiving, by the first terminal device, first indication information transmitted by the network device; and
determining, by the first terminal device based on the first indication information, whether the first RO set comprises the one or more dynamically configured ROs.

6. The method according to claim 5, wherein the first indication information is determined based on a result of a machine learning model.

7. The method according to claim 5 or 6, wherein the first indication information is carried in one or more of following information: downlink control information DCI, a system information block SIB, system information SI, or radio resource control RRC.

8. The method according to any one of claims 1 to 7, wherein the load of the first region comprises a quantity of terminal devices in the first region that request access, and/or a type of the terminal device in the first region that requests access.

9. The method according to claim 8, wherein the quantity of the terminal devices is used to determine a first value; and when the first value is less than a first threshold, the first RO set does not comprise one or more dynamically configured ROs; when the first value is greater than or equal to the first threshold, the first RO set comprises one or more dynamically configured ROs.

10. The method according to claim 8 or 9, wherein the type of the terminal device comprises a first type that supports network energy saving; and when a type of the first terminal device is the first type, the first RO set comprises an additional second RO subset.

11. The method according to claim 10, wherein the first RO set comprises a statically configured third RO subset; and a cycle of an RO in the second RO subset is less than a cycle of an RO in the third RO subset.

12. The method according to claim 10 or 11, wherein an enabling or disabling time of any RO in the second RO subset is determined based on a reception time of an activation or deactivation configuration indication and a first time parameter.

13. The method according to any one of claims 1 to 12, wherein that the first RO set is related to the load of the first region further comprises one or both of following:
a quantity of ROs in the first RO set being related to the load of the first region; or
a cycle of an RO in the first RO set being related to the load of the first region.

14. The method according to claim 13, wherein a second SSB transmitted by the network device corresponds to a second RO set; the second SSB corresponds to a second region; and when a load of the second region is greater than the load of the first region, a quantity of ROs in the second RO set is greater than the quantity of the ROs in the first RO set.

15. The method according to any one of claims 1 to 14, wherein the first RO set is also determined based on one or more of following information:
a service type of the first terminal device;
a load of a first cell in which the first terminal device is located;
location information of the first terminal device;
a channel quality of the first terminal device;
a resource threshold of the first region; or
a quantity of available ROs in the first region.

16. The method according to claim 15, wherein the load of the first cell comprises the load of the first region; the network device is a network device i; the first terminal device is a terminal device *j*; and a quantity *P_{i,j}* of ROs in the first RO set is: ${P}_{i , j} = {P}_{max} ∗ \left(α∗\frac{{d}_{i , j}}{{d}_{max}}+β∗\frac{{SNR}_{i , j}}{{SNR}_{target}}+γ∗\frac{{L}_{i}}{{L}_{max}}\right) ,$ wherein *Pₘₐₓ* denotes a maximum quantity of available ROs of the network device; *d_{i,j}* denotes a distance between the first terminal device and the network device; *dₘₐₓ* denotes a maximum distance between the network device and the first region; *SNR_{i,j}* denotes a channel quality between the first terminal device and the network device; *SNR_{target}* denotes a target channel quality; *Lᵢ* denotes a load of the first cell at a current instant; *L*ₘₐₓ denotes a maximum load of the first cell; *α_{,} β, γ* denote weight factors; and *α + β* + *γ* = 1.

17. The method according to claim 15, wherein the load of the first region is a quantity of terminal devices; and when a difference between a request density of the first region and an average request density of the first cell is greater than the resource threshold, a quantity of ROs in the first RO set is adjusted.

18. The method according to any one of claims 1 to 17, wherein the first SSB is transmitted via a first beam; and the first region is a region covered by the first beam.

19. A wireless communication method, comprising:
transmitting, by a network device, a first synchronization signal block SSB to a first terminal device; and
receiving, by the network device, uplink transmission by using a first random access channel occasion RO set corresponding to the first SSB,
wherein the first SSB corresponds to a first region; and the first RO set is related to a load of the first region.

20. The method according to claim 19, wherein that the first RO set is related to the load of the first region comprises: whether the first RO set comprises one or more dynamically configured ROs being related to the load of the first region.

21. The method according to claim 20, wherein the one or more dynamically configured ROs comprise a first RO subset; and any RO in the first RO subset is dynamically configured via activation or deactivation.

22. The method according to claim 20, wherein the one or more dynamically configured ROs comprise an additional second RO subset; and the second RO subset is disposed in a first resource pool based on a type of the first terminal device.

23. The method according to any one of claims 20 to 22, wherein the method further comprises:
transmitting, by the network device, first indication information to the first terminal device, wherein the first indication information is used to indicate whether the first RO set comprises the one or more dynamically configured ROs.

24. The method according to claim 23, wherein the first indication information is determined based on a result of a machine learning model.

25. The method according to claim 23 or 24, wherein the first indication information is carried in one or more of following information: downlink control information DCI, a system information block SIB, system information SI, or radio resource control RRC.

26. The method according to any one of claims 19 to 25, wherein the load of the first region comprises a quantity of terminal devices in the first region that request access, and/or a type of the terminal device in the first region that requests access.

27. The method according to claim 26, wherein the quantity of the terminal devices is used to determine a first value; and when the first value is less than a first threshold, the first RO set does not comprise one or more dynamically configured ROs; when the first value is greater than or equal to the first threshold, the first RO set comprises one or more dynamically configured ROs.

28. The method according to claim 26 or 27, wherein the type of the terminal device comprises a first type that supports network energy saving; and when a type of the first terminal device is the first type, the first RO set comprises an additional second RO subset.

29. The method according to claim 28, wherein the first RO set comprises a statically configured third RO subset; and a cycle of an RO in the second RO subset is less than a cycle of an RO in the third RO subset.

30. The method according to claim 28 or 29, wherein an enabling or disabling time of any RO in the second RO subset is determined based on a reception time of an activation or deactivation configuration indication and a first time parameter.

31. The method according to any one of claims 19 to 30, wherein that the first RO set is related to the load of the first region further comprises one or both of following:
a quantity of ROs in the first RO set being related to the load of the first region; or
a cycle of an RO in the first RO set being related to the load of the first region.

32. The method according to claim 31, wherein a second SSB transmitted by the network device corresponds to a second RO set; the second SSB corresponds to a second region; and when a load of the second region is greater than the load of the first region, a quantity of ROs in the second RO set is greater than the quantity of the ROs in the first RO set.

33. The method according to any one of claims 19 to 32, wherein the first RO set is also determined based on one or more of following information:
a service type of the first terminal device;
a load of a first cell in which the first terminal device is located;
location information of the first terminal device;
a channel quality of the first terminal device;
a resource threshold of the first region; or
a quantity of available ROs in the first region.

34. The method according to claim 33, wherein the load of the first cell comprises the load of the first region; the network device is a network device *i*; the first terminal device is a terminal device *j*; and a quantity of ROs in the first RO set is: ${P}_{i , j} = {P}_{max} ∗ \left(α∗\frac{{d}_{i , j}}{{d}_{max}}+β∗\frac{{SNR}_{i , j}}{{SNR}_{target}}+γ∗\frac{{L}_{i}}{{L}_{max}}\right) ,$ wherein *Pₘₐₓ* denotes a maximum quantity of available ROs of the network device; *d_{i,j}* denotes a distance between the first terminal device and the network device; *dₘₐₓ* denotes a maximum distance between the network device and the first region; *SNR_{i,j}* denotes a channel quality between the first terminal device and the network device; *SNR_{target}* denotes a target channel quality; *Lᵢ* denotes a load of the first cell at a current instant; *Lₘₐₓ* denotes a maximum load of the first cell; *α, β, γ* denote weight factors; and *α + β + γ* = 1.

35. The method according to claim 33, wherein the load of the first region is a quantity of terminal devices; and when a difference between a request density of the first region and an average request density of the first cell is greater than the resource threshold, a quantity of ROs in the first RO set is adjusted.

36. The method according to any one of claims 19 to 35, wherein the first SSB is transmitted via a first beam; and the first region is a region covered by the first beam.

37. A wireless communications apparatus, wherein the apparatus is a first terminal device; and the apparatus comprises:
a receiving unit, receiving a first synchronization signal block SSB transmitted by a network device; and
a transmitting unit, performing uplink transmission by using a first random access channel occasion RO set corresponding to the first SSB,
wherein the first SSB corresponds to a first region; and the first RO set is related to a load of the first region.

38. The apparatus according to claim 37, wherein that the first RO set is related to the load of the first region comprises: whether the first RO set comprises one or more dynamically configured ROs being related to the load of the first region.

39. The apparatus according to claim 38, wherein the one or more dynamically configured ROs comprise a first RO subset; and any RO in the first RO subset is dynamically configured via activation or deactivation.

40. The apparatus according to claim 38, wherein the one or more dynamically configured ROs comprise an additional second RO subset; and the second RO subset is disposed in a first resource pool based on a type of the first terminal device.

41. The apparatus according to any one of claims 38 to 40, wherein the receiving unit is further configured to receive first indication information transmitted by the network device; and the apparatus further comprises:
a determining unit, determining, based on the first indication information, whether the first RO set comprises the one or more dynamically configured ROs.

42. The apparatus according to claim 41, wherein the first indication information is determined based on a result of a machine learning model.

43. The apparatus according to claim 41 or 42, wherein the first indication information is carried in one or more of following information: downlink control information DCI, a system information block SIB, system information SI, or radio resource control RRC.

44. The apparatus according to any one of claims 37 to 43, wherein the load of the first region comprises a quantity of terminal devices in the first region that request access, and/or a type of the terminal device in the first region that requests access.

45. The apparatus according to claim 44, wherein the quantity of the terminal devices is used to determine a first value; and when the first value is less than a first threshold, the first RO set does not comprise one or more dynamically configured ROs; when the first value is greater than or equal to the first threshold, the first RO set comprises one or more dynamically configured ROs.

46. The apparatus according to claim 44 or 45, wherein the type of the terminal device comprises a first type that supports network energy saving; and when a type of the first terminal device is the first type, the first RO set comprises an additional second RO subset.

47. The apparatus according to claim 46, wherein the first RO set comprises a statically configured third RO subset; and a cycle of an RO in the second RO subset is less than a cycle of an RO in the third RO subset.

48. The apparatus according to claim 46 or 47, wherein an enabling or disabling time of any RO in the second RO subset is determined based on a reception time of an activation or deactivation configuration indication and a first time parameter.

49. The apparatus according to any one of claims 37 to 48, wherein that the first RO set is related to the load of the first region further comprises one or both of following:
a quantity of ROs in the first RO set being related to the load of the first region; or
a cycle of an RO in the first RO set being related to the load of the first region.

50. The apparatus according to claim 49, wherein a second SSB transmitted by the network device corresponds to a second RO set; the second SSB corresponds to a second region; and when a load of the second region is greater than the load of the first region, a quantity of ROs in the second RO set is greater than the quantity of the ROs in the first RO set.

51. The apparatus according to any one of claims 37 to 50, wherein the first RO set is also determined based on one or more of following information:
a service type of the first terminal device;
a load of a first cell in which the first terminal device is located;
location information of the first terminal device;
a channel quality of the first terminal device;
a resource threshold of the first region; or
a quantity of available ROs in the first region.

52. The apparatus according to claim 51, wherein the load of the first cell comprises the load of the first region; the network device is a network device *i*; the first terminal device is a terminal device *j*; and a quantity of ROs in the first RO set is: ${P}_{i , j} = {P}_{max} ∗ \left(α∗\frac{{d}_{i , j}}{{d}_{max}}+β∗\frac{{SNR}_{i , j}}{{SNR}_{target}}+γ∗\frac{{L}_{i}}{{L}_{max}}\right) ,$ wherein *Pₘₐₓ* denotes a maximum quantity of available ROs of the network device; *d_{i,j}* denotes a distance between the first terminal device and the network device; *dₘₐₓ* denotes a maximum distance between the network device and the first region; *SNR_{i,j}* denotes a channel quality between the first terminal device and the network device; *SNR_{target}* denotes a target channel quality; *Lᵢ* denotes a load of the first cell at a current instant; *Lₘₐₓ* denotes a maximum load of the first cell; *α, β, γ* denote weight factors; and *α + β* + *γ* = 1.

53. The apparatus according to claim 51, wherein the load of the first region is a quantity of terminal devices; and when a difference between a request density of the first region and an average request density of the first cell is greater than the resource threshold, a quantity of ROs in the first RO set is adjusted.

54. The apparatus according to any one of claims 37 to 53, wherein the first SSB is transmitted via a first beam; and the first region is a region covered by the first beam.

55. A wireless communications apparatus, wherein the apparatus is a network device, and the apparatus comprises:
a transmitting unit, transmitting a first synchronization signal block SSB to a first terminal device; and
a receiving unit, receiving uplink transmission by using a first random access channel occasion RO set corresponding to the first SSB,
wherein the first SSB corresponds to a first region; and the first RO set is related to a load of the first region.

56. The apparatus according to claim 55, wherein that the first RO set is related to the load of the first region comprises: whether the first RO set comprises one or more dynamically configured ROs being related to the load of the first region.

57. The apparatus according to claim 56, wherein the one or more dynamically configured ROs comprise a first RO subset; and any RO in the first RO subset is dynamically configured via activation or deactivation.

58. The apparatus according to claim 56, wherein the one or more dynamically configured ROs comprise an additional second RO subset; and the second RO subset is disposed in a first resource pool based on a type of the first terminal device.

59. The apparatus according to any one of claims 56 to 58, wherein the transmitting unit is further configured to transmit first indication information to the first terminal device, wherein the first indication information is used to indicate whether the first RO set comprises the one or more dynamically configured ROs.

60. The apparatus according to claim 59, wherein the first indication information is determined based on a result of a machine learning model.

61. The apparatus according to claim 59 or 60, wherein the first indication information is carried in one or more of following information: downlink control information DCI, a system information block SIB, system information SI, or radio resource control RRC.

62. The apparatus according to any one of claims 55 to 61, wherein the load of the first region comprises a quantity of terminal devices in the first region that request access, and/or a type of the terminal device in the first region that requests access.

63. The apparatus according to claim 62, wherein the quantity of the terminal devices is used to determine a first value; and when the first value is less than a first threshold, the first RO set does not comprise one or more dynamically configured ROs; when the first value is greater than or equal to the first threshold, the first RO set comprises one or more dynamically configured ROs.

64. The apparatus according to claim 62 or 63, wherein the type of the terminal device comprises a first type that supports network energy saving; and when a type of the first terminal device is the first type, the first RO set comprises an additional second RO subset.

65. The apparatus according to claim 64, wherein the first RO set comprises a statically configured third RO subset; and a cycle of an RO in the second RO subset is less than a cycle of an RO in the third RO subset.

66. The apparatus according to claim 64 or 65, wherein an enabling or disabling time of any RO in the second RO subset is determined based on a reception time of an activation or deactivation configuration indication and a first time parameter.

67. The apparatus according to any one of claims 55 to 66, wherein that the first RO set is related to the load of the first region further comprises one or both of following:
a quantity of ROs in the first RO set being related to the load of the first region; or
a cycle of an RO in the first RO set being related to the load of the first region.

68. The apparatus according to claim 67, wherein a second SSB transmitted by the network device corresponds to a second RO set; the second SSB corresponds to a second region; and when a load of the second region is greater than the load of the first region, a quantity of ROs in the second RO set is greater than the quantity of the ROs in the first RO set.

69. The apparatus according to any one of claims 55 to 68, wherein the first RO set is also determined based on one or more of following information:
a service type of the first terminal device;
a load of a first cell in which the first terminal device is located;
location information of the first terminal device;
a channel quality of the first terminal device;
a resource threshold of the first region; or
a quantity of available ROs in the first region.

70. The apparatus according to claim 69, wherein the load of the first cell comprises the load of the first region; the network device is a network device i; the first terminal device is a terminal device *j*; and a quantity *P_{i,j}* of ROs in the first RO set is: ${P}_{i , j} = {P}_{max} ∗ \left(α∗\frac{{d}_{i , j}}{{d}_{max}}+β∗\frac{{SNR}_{i , j}}{{SNR}_{target}}+γ∗\frac{{L}_{i}}{{L}_{max}}\right) ,$ wherein *Pₘₐₓ* denotes a maximum quantity of available ROs of the network device; *d_{i,j}* denotes a distance between the first terminal device and the network device; *dₘₐₓ* denotes a maximum distance between the network device and the first region; *SNR_{i,j}* denotes a channel quality between the first terminal device and the network device; *SNR_{target}* denotes a target channel quality; *Lᵢ* denotes a load of the first cell at a current instant; *Lₘₐₓ* denotes a maximum load of the first cell; *α , β , γ* denote weight factors; and *α + β + γ* = 1.

71. The apparatus according to claim 69, wherein the load of the first region is a quantity of terminal devices; and when a difference between a request density of the first region and an average request density of the first cell is greater than the resource threshold, a quantity of ROs in the first RO set is adjusted.

72. The apparatus according to any one of claims 55 to 71, wherein the first SSB is transmitted via a first beam; and the first region is a region covered by the first beam.

73. A communications apparatus, comprising a memory and a processor, wherein the memory is configured to store a program; and the processor is configured to invoke the program in the memory to perform the method according to any one of claims 1 to 36.

74. An apparatus, comprising a processor, invoking a program from a memory to perform the method according to any one of claims 1 to 36.

75. A chip, comprising a processor, invoking a program from a memory, to cause a device installed with the chip to perform the method according to any one of claims 1 to 36.

76. A computer-readable storage medium, storing a program, wherein the program causes a computer to perform the method according to any one of claims 1 to 36.

77. A computer program product, comprising a program, wherein the program causes a computer to perform the method according to any one of claims 1 to 36.

78. A computer program, wherein the computer program causes a computer to perform the method according to any one of claims 1 to 36.
